(19) Europäisches Patentamt
European Patent Office
Office européen des brevets

(11) **EP 3 997 482 B1**

(12) **EUROPEAN PATENT SPECIFICATION**

(45) Date of publication and mention
of the grant of the patent:
**27.08.2025 Bulletin 2025/35**

(21) Application number: **20742403.7**

(22) Date of filing: **10.07.2020**

(51) International Patent Classification (IPC):
**G01S 15/89** $^{(2006.01)}$ **G01S 7/52** $^{(2006.01)}$

(52) Cooperative Patent Classification (CPC):
**G01S 15/8995; G01S 7/52046; G01S 15/8915;**
G01S 15/89; G01S 15/8993

(86) International application number:
**PCT/GB2020/051671**

(87) International publication number:
**WO 2021/009495 (21.01.2021 Gazette 2021/03)**

(54) **METHOD AND APPARATUS FOR ADAPTIVE BEAMFORMING**

VERFAHREN UND VORRICHTUNG FÜR ADAPTIVE STRAHLFORMUNG

PROCÉDÉ ET APPAREIL DE FORMATION DE FAISCEAU ADAPTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2019 GB 201910043**

(43) Date of publication of application:
**18.05.2022 Bulletin 2022/20**

(73) Proprietors:
• **Universitetet I Oslo**
**0316 Oslo (NO)**
• **Norwegian University of Science and
Technology (NTNU)**
**7491 Trondheim (NO)**

(72) Inventors:
• **RINDAL, Ole Marius Hoel**
**0852 Oslo (NO)**
• **AUSTENG, Andreas**
**1358 Jar (NO)**
• **RODRIGUEZ-MOLARES, Alfonso**
**7030 Trondheim (NO)**

(74) Representative: **Dehns**
**10 Old Bailey**
**London EC4M 7NG (GB)**

(56) References cited:
**US-A1- 2013 253 325 US-A1- 2015 293 215**

**Description**

BACKGROUND OF THE INVENTION

This invention relates to data combination and adaptive beamforming. Although this invention is not limited to the field of ultrasound, and is relevant also in a number of other fields, such as radar and sonar imaging, the currently known imaging techniques can be most easily explained with reference to ultrasound imaging.

It is known in conventional ultrasound imaging to form an image by transmitting a focused wave into a region, time-shift the back-scattered signals which are received and then sum these results - this is often referred to as the conventional "delay and sum" approach. US2013/0253325A1 discloses a method in which multiple sub-images are combined whilst giving more weight to sub-image information that is more likely to improve a combined image quality. The weighting factor may be determined from geometry of a location. US2015/0293215A1 discloses an ultrasound imaging apparatus including a beamformer configured to perform beamforming on the echo signal based on a quality of voxels to generate an output signal.

An alternative method of ultrasound imaging is known as adaptive beamforming. There exist a myriad of adaptive beamforming methods, which can roughly be grouped into two main categories; adaptive element weighting and adaptive image weighting. Adaptive beamforming using adaptive element weighting aims at calculating element weights so as to increase the signal strength to/from a certain direction and minimize interference and noise. Adaptive element weights are applied to the signals received from the individual elements, before the signals are then combined into an intensity value to be displayed as an image. The adaptive beamforming weights are often calculated based on a covariance matrix as in Minimum Variance beamforming.

The van-Cittert-Zernike (VCZ) theorem forms the basis of various other methods of adaptive beamforming utilizing the coherence between received signals to create a coherence image, an adaptive weight per pixel in the image. The theorem predicts a similarity, or coherence, between the focused signals received by an array of spatially separated transducers. Noise is assumed to have low coherence, while wanted signals have high coherence. There are many proposed methods for calculating the predicted coherence between the signals received on different transducers. The quality of an ultrasound image can be improved by multiplying each image pixel, the backscatter value, with the corresponding calculated coherence. Thus, suppressing pixels with low coherence noise. Or the coherence information alone can be used as an image, as in short-lag spatial coherence imaging (SLSC).

Generally 2D ultrasound imaging will provide raw data which is four-dimensional. For example, in Coherent Plane Wave Compounding (CPWC) plane waves are transmitted across an entire region at a number of different angles using a transmission array, and are then received by a number of different receivers. For a plane wave transmitted at a particular angle, the data received by a particular receiver can be represented as a two-dimensional grid with coordinates of Z (depth or range) and X (lateral). Since a 2D image is produced by each receiver, stacking these images gives, for each transmission angle, a data cube, where the third dimension is known as the receive dimension (RX). A data cube is produced for each angle of transmission of a plane wave, for example transmissions at five different angles will give five different cubes. The dimension "between" these cubes is known as the transmit dimension (TX). In addition, time can also be included, forming a fifth dimension to the data. In a similar manner, 3D ultrasound imaging will provide raw data that is five-dimensional, where time can be included as a sixth dimension.

It is known for this data to be combined by conventional delay-and-sum, or adaptive, beamforming, across the receive dimension (RX), as described above. For 2D imaging, this provides a low quality 2D image for each transmission angle, and similarly for 3D imaging this provides a low quality 3D image for each transmission angle. These images are then combined coherently, or in a further adaptive beamforming step.

The Applicant has recognised that there is a problem with this known approach in that conventional methods of producing these images by delay-and-sum beamforming provide low quality images. The image quality can be improved by carrying out adaptive beamforming at both stages of the data processing, however this is time consuming and computationally expensive.

The present invention seeks to address these shortcomings.

SUMMARY OF THE INVENTION

From a first aspect, the invention provides a method of imaging a target region, as claimed in claim 1.

From a second aspect, the invention provides an imaging device as claimed in claim 9.

Thus it will be seen that, in accordance with the invention, by first summing across the transmit dimension to form a single data cube, the data from various transmissions may be combined into a single data cube of higher quality to do synthetic focusing of the received signals. In accordance with the invention adaptive beamforming is then carried out on this data cube, resulting in a single adaptive image. The adaptive image may optionally be a high-quality image. This invention allows an adaptive image, either a high-quality image or an image showing different information than a conventional DAS image, to be produced whilst only carrying out the computationally expensive adaptive beamforming processing stage once. The term "high-quality" is used herein to mean that the image is of better quality than an image produced using conventional "delay-and-sum" imaging techniques on the same data set. The adaptive image could, for example, be a coherence image produced using short lag spatial coherence imaging, as explained herein. This method and the advantages which it offers are equally as applicable in the case of two-dimensional and three-dimensional imaging and image processing.

It will be understood by the skilled person that the first dimension can be either a "depth" within a region, or a "range" within a region, depending on the different types of imaging. For example, ultrasound imaging is often used to image an internal region of a human or animal body, so the transducer will generally be placed directly above the region of the body to be imaged, and therefore the first dimension would be referred to as the depth within that region of the body. Alternatively, other imaging methods such as sonar and radar often image the outer surface of an object e.g. satellite images taken of the earth. In this case a satellite may be positioned at a certain height above the closest point on the surface of the earth, but it may be imaging a region which is at a different point on the curved surface of the earth, and is therefore further away due to the curved surface mapping. This distance, the first dimension, is referred to herein by the term "range".

In some embodiments, the adaptive beamforming is carried out by software. In some embodiments, the stage of summing the data acquired from each of the at least two transmissions for each receiving device, at stage vi, is carried out by software. The Applicant has appreciated that using software beamforming opens up the possibility of storing the signals received on individual transducer elements (the channel data) for multiple different transmissions, allowing real time access to all ultrasound channel-data simultaneously, and therefore allowing data to be processed differently to techniques which are known in the art.

Flexible software implementations have introduced a number of "adaptive beamformers". Such adaptive beamformers aim at improving the quality of a final ultrasound image by exploiting information derived from the channel-data when combining the data into the final image pixel. They are therefore to be contrasted with the conventional 'beamforming' in prior art systems where the raw individual signals from the transducer elements are summed early in the processing chain, often in specialized hardware, so that such individual signals are not available for analysis. Two examples of adaptive beamformers are Capon's Minimum Variance beamformer and the Short Lag Spatial Coherence, which are explained in detail below.

At stage vi) data acquired from at least two transmissions for each receiving device is summed. In some embodiments, the method further comprises carrying out stages iv) and v) more than once i.e. such that overall the stages of transmission, reception and forming of a data set are carried out a total of at least three times. Thus in some embodiments, the method further comprises making at least one further transmission of signals into the region, wherein the at least one further transmission is in a different direction and/or made from a different position, distinct from the direction or position of the previous transmissions. In such embodiments, the method further comprises repeating steps ii) and iii) for the signals received from the at least one further transmission. In some embodiments, the method comprises making at least five transmissions, each in different directions or from different positions.

In some embodiments the transmitted signal is a sound wave, preferably an ultrasound wave. In other embodiments, the transmitted signal is an electromagnetic wave. This is the case, for example, in a radar imaging system using a method according to the present invention.

In some embodiments the first transmission and/or the second transmission is carried out using a majority of the plurality of transmitting devices, for example as is done in Coherent Plane Wave Compounding. In this example, one or multiple planar transmit beams are transmitted into a domain at different transmit angles $\alpha$.

In some embodiments the plurality of transmitters are arranged so that the first transmission and/or the second transmission originates from a virtual source located behind the transmitters. This is often referred to as a diverging wave waveform.

In some embodiments the first transmission and/or the second transmission is a focused-wave waveform.

In some embodiments the first transmission and/or the second transmission is an omni-directional wave. In this case the first transmission and the second transmission are made from different positions.

The second direction of the second transmission may be at a distinct angle to the first direction of the first transmission. Optionally said distinct angles are each in a range from a minimum angle value $-\alpha_{max}$, to a maximum angle value $\alpha_{max}$. Optionally the value of $\alpha_{max}$ is determined to be $\alpha_{max} \approx 1/2\text{f\#}$, wherein f# is a selected ratio between the depth of a pixel and the size of a receiving aperture.

Features of any aspect or embodiment described herein may, wherever appropriate, be applied to any other aspect or embodiment described herein. Where reference is made to different embodiments or sets of embodiments, it should be understood that these are not necessarily distinct but may overlap.

BRIEF DESCRIPTION OF THE DRAWINGS

Certain preferred embodiments of the invention will now be described, by way of example only, with reference to the accompanying drawings, in which:

Figure 1 is a schematic representation of an imaging system;
Figure 2 is a schematic representation of a prior art method of data processing;
Figure 3 is a schematic representation of a method in accordance with the present invention;
Figures 4a-4d show images created by processing data using various known data processing techniques;
Figure 4e shows an image created by processed data using a method in accordance with the present invention;
Figure 5 is a graph showing the computational time required for the various data processing techniques used to produce the images of Figures 4a-4e;
Figure 6 is an ultrasound image of an experimental phantom created by processing ultrasound data using a conventional SLSC adaptive beamforming algorithm; and
Figure 7 is an ultrasound image constructed from the same data as was used to produce the image shown in Figure 6, but processed using a method in accordance with the invention.

DETAILED DESCRIPTION

The following examples are given with reference to a two-dimensional imaging system and method, however it will be readily understood by the skilled person that the same disclosure and teaching applies equally in the context of three-dimensional imaging systems and methods.

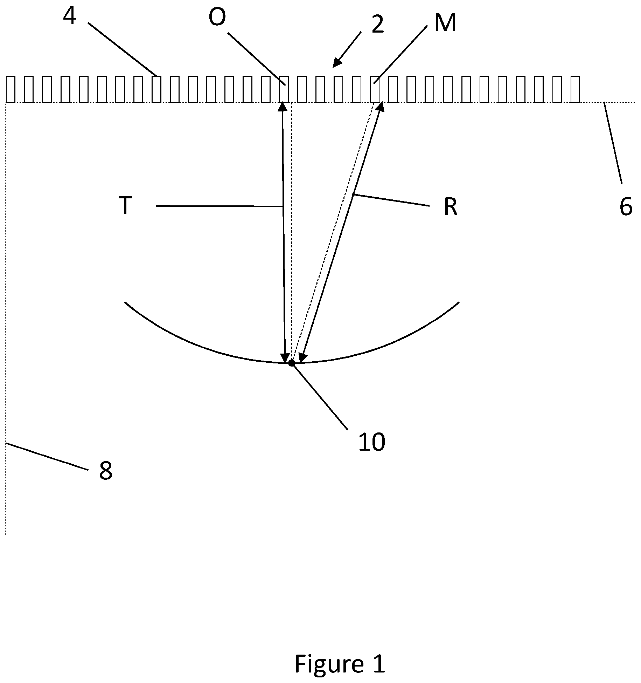

Figure 1 shows schematically a linear array 2 made up of a number (M) of individual transducer elements 4, arranged along an x-axis 6. The transducer elements may, for example be ultrasonic transducers. The linear array 2 irradiates a region with a transmit beam, which can be either planar, diverging or converging, and which can travel, for example, in the direction of the z-axis 8.

A particular transducer element m receives a signal $h_{m,a}(t)$ following a particular transmit a. In the example case of Figure 1, used for explanatory purposes, the signal is reflected from a particular point 10, $\vec{x}=(z,x)$. This signal has travelled a first distance, denoted as T, from the origin o of the transmitted wave to this point, and has travelled a distance, denoted as R, from the point 10 to the receiving transducer element m. Assuming the signal is travelling in a medium in which the sound speed is $c_0$, therefore the delay from transmission to reception of the signal shown in Figure 1 is given by:

$$\Delta t = (T + R)/c_0,$$

The receive distance R is independent of the type of transmit which is made. It is calculated as:

$$R(z, x, m) = \sqrt{z^2 + (x - m)^2}$$

The transmit distance T depends on the type of beam which is transmitted from the array 2. Some specific examples are considered below, for explanatory purposes:
In the case of Coherent Plane Wave Compounding one or multiple planar transmit beams are transmitted into a domain at different transmit angles $\alpha$. In this case the transmit distance T, is:

$$T(z, x, \alpha) = (z \cos(\alpha) + x \sin(\alpha))$$

In the case of a Diverging Wave, originating from a virtual source $(z_s, x_s)$ behind the transducer, the transmit distance T is given by:

$$T(z, x, \quad z_s, x_s) = \sqrt{(x - x_s)^2 + (z - z_s)^2}$$

In the case of a focused wave, which can be either converging or diverging, one can calculate the transmit distance T assuming a spherical virtual source model. In this model a virtual source $\vec{v}_s = (z_s, x_s)$ is placed in the focus of the transmission, with the centre of the transmission originating from $\vec{p}_c = (z_c, x_c)$ and the transmit distance T is given by:

$$T(z, x, z_s, x_s) = (|\vec{v}_s - \vec{p}_c| + |\vec{x} - \vec{v}_s|)$$

This "time of flight" value, $\Delta t$, is used to assign a signal value $s_{m,a}$, also known as a *pixel value,* to a particular pixel corresponding to a point in the imaged region, for a particular transducer element m and a particular transmission a. So that:

$$s_{m,a} = h_{m,a}(t)\big|_{t=\Delta t}$$

Conventionally, these pixel values for different transducer elements and for different transmissions are combined using "Delay-and-Sum" beamforming. In this approach an image $b_{DAS}$ is formed by coherently combining the pixel values as received by all elements M from all transmits $N_a$. Giving:

$$b_{DAS} = \sum_{a=0}^{N_a-1} \sum_{m=0}^{M-1} w_a^{T_x}[z,x] w_m^{R_x}[z,x] s_{m,a}[z,x]$$

Here $w_m^{Rx}$ is the receive apodization with dimensions $[N_z, N_x, M]$ while $w_a^{Tx}$ is the transmit apodization with dimensions $[N_z, N_x, N_a]$. An apodization function, or tapering function (also known as a window function) is a mathematical function that is zero-valued outside of some chosen interval, normally symmetric around the middle of the interval, usually near a maximum in the middle, and usually tapering away from the middle. One such window function is known as a Boxcar window. For a uniform Boxcar window the receive apodization $w_m^{Rx}$ can be calculated by

$$w_m^{Rx}[z,x,x_m] = \begin{cases} 1, & \text{if } |x - x_m| \leq \frac{z}{2f\#} \\ 0, & \text{otherwise.} \end{cases}$$

where (z,x) is the pixel position and $x_n$ is the position of the receiving element and the f# is the selected ratio between the pixel depth and the size of the receiving aperture. Other window functions such as, but not limited to, Hamming and Tukey can also be used. For the transmit apodization $w_a^{Tx}$ the apodization is dependent on the type of transmitted wave and which area the transmitted wave is transmitted into.

For simplicity the spatial coordinates can be dropped, the sum over each transmit a can be defined as the sum over the transmit dimension $T_x$, and the sum over each transducer element m can be defined as the sum over the receive dimension $R_x$.

$$b_{DAS} = \sum_{a=0}^{N_a-1} \sum_{m=0}^{M-1} w_a^{T_x} w_m^{R_x} s_{m,a} = \sum_{T_x} w_a^{T_x} \sum_{R_x} w_m^{R_x} s_{m,a}$$

This sum shows the conventional way of implementing "Delay-and-Sum". Once data is received for all of the M elements, the sum over the receive dimension $R_x$ is carried out during the imaging process, whilst further transmissions are being made.

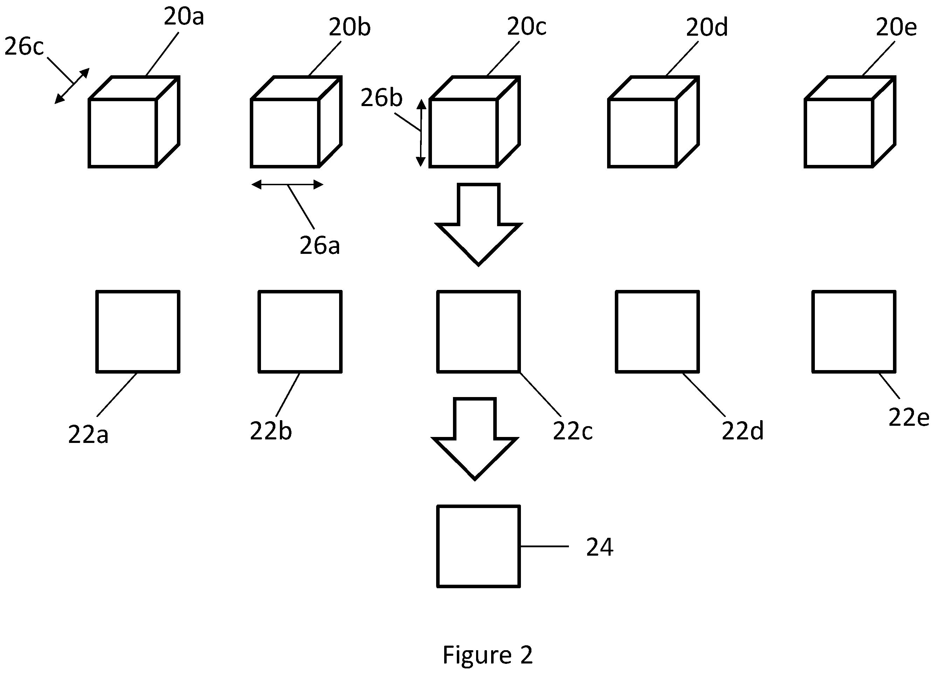

In particular, in the above equation, the data for each transmission a can be considered as a three dimensional cube, with dimensions of z, x, and M - the number of receive elements. Thus the pixel values $s_{m,1}$ have dimensions $[N_z, N_x, M]$, and there will be $N_a$ of these data cubes, one for reach transmit a. This is shown in Figure 2, which represents the processing of the conventional processing of these data cubes.

Figure 2 represents schematically five data cubes. Each cube (20a, 20b, 20c, 20d, 20e) corresponds to data from a particular transmission; in this example there have been five different transmissions. Each data cube has two spatial dimensions, an x-dimension 26a and a z-dimension 26b (i.e. the depth or range of the pixel), and also has a third dimension, referred to as the receive dimension 26c, since each two-dimensional data set corresponds to data received on a particular transducer element m.

In the "Delay-and-Sum" approach described in the above equation, the sum over the receive dimension 26c is carried out first, producing a single transmission image (22a, 22b, 22c, 22d, 22e) corresponding to each transmission. The images produced from each transmission are then summed to produce a final image 24, referred to above as $b_{DAS}$.

However, the Applicant has appreciated that using software beamforming, opens up the possibility of storing the signals received on individual transducer elements (the channel data) for multiple different transmissions, and therefore of processing the data differently.

Considering again the equation:

$$b_{DAS} = \sum_{T_x} w_a^{T_x} \sum_{R_x} w_m^{R_x} s_{m,a}$$

$$b_a^{\overline{R_{xDAS}}} = \sum_{R_x} w_m^{R_x} s_{m,a}$$

Where $b_a^{\overline{R_{xDAS}}}$ is the result of the coherent combination of the signals over the receive elements M.

Therefore

$$b_{DAS} = \sum_{T_x} w_a^{T_x} b_a^{\overline{R_{xDAS}}} = b^{\overline{T_{xDAS}}} \; \overline{R_{xDAS}}$$

Where $b_a^{\overline{T_{xDAS}}}$ is likewise the coherent combination of the signal over the transmit dimension.

This equation therefore shows the process as represented in Figure 2, the data is first summed over the receive dimension 26c, and then summed over the different transmissions, the transmit dimension $T_x$.

A sum is commutative and therefore $\hat{b}_{DAS} = b^{\overline{R_{xDAS}} \; \overline{T_{xDAS}}} = b^{\overline{T_{xDAS}} \; \overline{R_{xDAS}}} = b_{DAS}$

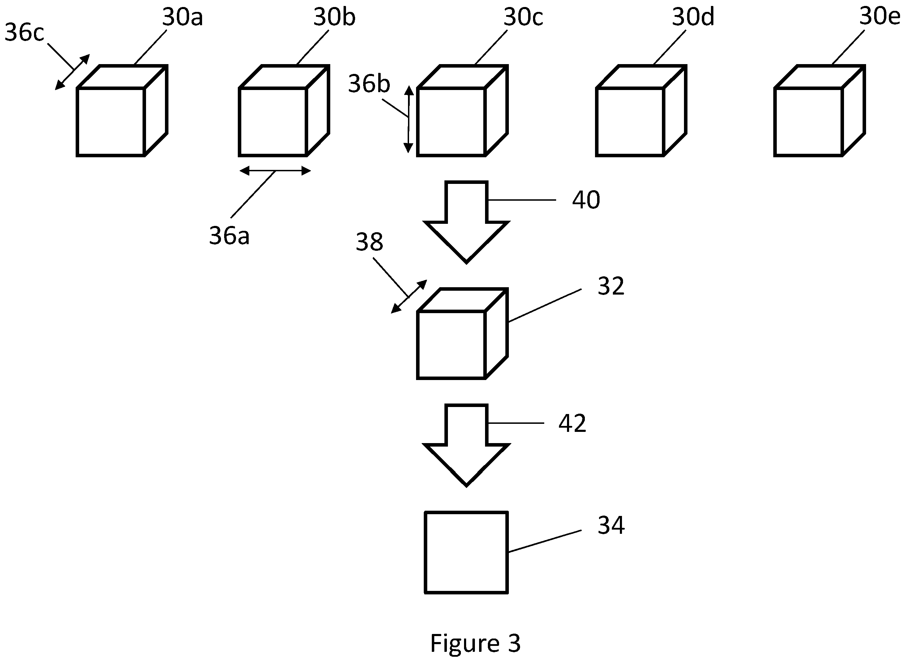

A key insight of the present invention is therefore to carry out this sum in a different order, to sum firstly on the transmit dimension $T_x$, to arrive at a three-dimensional data set, and then to sum on the receive dimension $R_x$ to arrive at a final image. This method is represented schematically in Figure 3. The equation for the final produced image is therefore:

$$\hat{b}_{DAS} = \sum_{R_x} w_m^{R_x} b_m^{\overline{T_{xDAS}}}$$

This process is represented schematically in Figure 3. Similarly to Figure 2, each of the data cubes 30a, 30b, 30c, 30d, 30e has two spatial dimensions, an x-dimension 36a, and a z-dimension 36b. Each two-dimensional image in the cube corresponds to a particular receive element 4, therefore giving each data cube a third receive dimension 36c. Each cube 30a, 30b, 30c, 30d and 30e corresponds to a particular transmission, this gives the transmit dimension $T_x$. In accordance with the present invention the data is summed firstly across the different transmissions, therefore giving a single data cube with the two spatial dimensions (z, x) and a third dimension, the receive dimension 38. This data can then be summed to give a single high-quality image 34.

Thus the described embodiment of the present invention processes received data in two stages: the first stage 40 sums the data across the transmit dimension, whilst the second stage 42 sums, or combines, the data cube produced by the first stage across the receive dimension, giving a single adaptive image, which may be a "high-quality" image. Thus far the only method of summing the received data that has been described is the conventional delay-and-sum approach, as denoted by the subscript 'DAS'. However, it is known in the art to process such received data using a method known as "adaptive beamforming".

There are many different adaptive beamformers which are known in the art. The dimension reduction discussed above is general and can be implemented using most known adaptive beamformers. For illustration purposes the dimension reduction strategy will be considered in more detail below using two of the most popular adaptive beamformers - Capon's Minimum Variance beamformer and the Short Lag Spatial Coherence.

Capon's Minimum Variance (MV)

Capon's Minimum Variance (MV) technique calculates a data dependent set of weights w while maintaining unity gain in the steering direction. This is posed as a minimization problem by

$$min_w E\{|b|^2\} = w^H \mathbf{R} w$$

subject to $\mathbf{w}^H\mathbf{a} = 1$ where $R \equiv E\{\mathbf{tt}^H\}$ is the spatial covariance matrix, E is the expected value operator and the steering vector a=1, because it is assumed that all signals are already delayed.

This equation can be solved using the method of Lagrange multipliers. This gives:

$$w_{\mathrm{MV}} = \frac{R^{-1}a}{a^H R^{-1}a.}$$

The spatial covariance matrix R is unknown, but assuming a linear array it can be estimated for point (z,x) by:

$$\hat{R}(z,x) = \frac{\sum_{k=-K}^{K} \sum_{l=0}^{M-L} \bar{t}_l(z-k,x)\bar{t}_l^H(z-k,x)}{(2K+1)(M-L+1)},$$

where (2K + 1) is the number of axial samples, L is the length of the subarray, and

$$\bar{t}_l(z,x) = \begin{bmatrix} t_l(z,x) & t_{l+1}(z,x) & \dots & t_{l+L-1}(x,z) \end{bmatrix}^T$$

The subarray averaging improves robustness. To further improve robustness, and numerical stability, diagonal loading is added to the estimated covariance matrix by $\tilde{R}(z, x) = R(z, x) + \varepsilon I$ where I is the identity matrix, and

$$\epsilon = \frac{\Delta}{L} tr\{\hat{R}(z,x)\}$$

where $tr\{\}$ is the trace operator.
The adaptive weights are then applied as

$$b_{\mathrm{MV}} = \frac{1}{M-L+1} \sum_{l=0}^{M-L} w_{\mathrm{MV}}^H \bar{t}_l$$

Conventionally, the minimum variance (MV) weightset is calculated for the signals received on the $M$ elements from one transmit a, and thus the $t$ in the equation for $\hat{R}(x, z)$ above is $t = s_{m,a}$.

This means that we are calculating the $w_a^{R_x}$ weightset from the Delay-and-Sum beamforming equation given above,

$$b_{DAS} = \sum_{a=0}^{N_a-1} \sum_{m=0}^{M-1} w_a^{T_x}[z,x] w_m^{R_x}[z,x] s_{m,a}[z,x]$$

and substituting

$$b_a^{\overline{R_xDAS}} = \sum_{R_x} w_m^{R_x} s_{m,a}$$

as defined in the case of Delay-and-Sum above with $b_{MV}$ as given above.

The resulting images, where the MV was applied over the $R_x$ dimension, are denoted by $b_a^{\overline{R_xMV}}$. Notice that we will have one such image for each transmit a, and thus we can do conventional coherent compounding over the transmit dimension

$$b^{\overline{T_xDAS}\ \overline{R_xMV}} = \sum_{T_x} w_a^{T_x} b_a^{\overline{R_xMV}}$$

One can also first do a conventional Delay-and-Sum over the receive elements as described above, and then set $t = b_a^{R_x}$ in the equation for $\hat{R}(x, z)$ above. This results in an adaptive $w_a^{T_x}$ weightset, and one can substitute

$$b_{DAS} = \sum_{T_x} w_a^{T_x} b_a^{\overline{R_xDAS}} = b^{\overline{T_xDAS} \quad \overline{R_xDAS}}$$

with the equation for $b_{MV}$ as given above. Let's denote the resulting image, where the MV was applied over the *Tx* dimension of multiple $b_a^{\overline{R_xDAS}}$ images as

$$b^{\overline{T_xMV} \quad \overline{R_xDAS}}$$

For the CPWC case, this means that the coherent compounding is adaptive.

Alternatively, one can do both - meaning that we apply MV first over the receive dimension, and then over the transmit dimension. Thus we are substituting both

$$b_a^{\overline{R_xDAS}} = \sum_{R_x} w_m^{R_x} s_{m,a}$$

and

$$b_{DAS} = \sum_{T_x} w_a^{T_x} b_a^{\overline{R_xDAS}} = b^{\overline{T_xDAS} \quad \overline{R_xDAS}}$$

with the equation for $b_{MV}$ as given above. Let's denote the resulting image as

$$b^{\overline{T_xMV} \quad \overline{R_xMV}}$$

For the CPWC case, this approach has elsewhere been referred to as *Double Adaptive Plane-Wave Imaging.*

All of the above-described methods are ways in which adaptive beamforming can be implemented within conventional data processing as described with reference to Figure 2.

However, a significant development provided in accordance with the present invention is the realization that the novel data processing method in which data is summed first on the transmit dimension and then combined, or summed, on the receive dimension (as shown in Figure 3), is particularly advantageous when used in combination with adaptive beamforming. Thus, conventional Delay-and-Sum processing can be done over $T_{x,,}$ but then

$$\hat{b}_{DAS} = \sum_{R_x} w_m^{R_x} b_m^{\overline{T_xDAS}}$$

can be substituted with the equation for $b_{MV}$ as given above, so that minimum variance adaptive beamforming is done on the $R_x$ dimension. Let's denote the resulting image as

$$b^{\overline{R_xMV} \quad \overline{T_xDAS}}$$

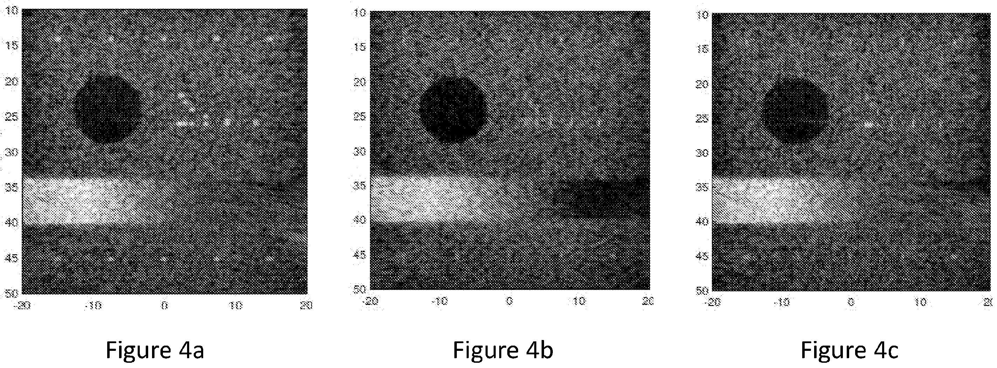

Figures 4a-e show images of the same region, which have been processed using the various methods discussed above. The data was created by carrying out Coherent Plane Wave Compounding Imaging, using an array of ultrasound transducers, of a particular region, carrying out five different transmissions ($N_a$=5) each at a different angle. The images are simulated images of an image quality benchmarking phantom including a hypoechoic cyst, a linear intensity gradient to evaluate contrast and point scatterers to evaluate resolution.

Figure 4a shows an image produced according to conventional "Delay-and-Sum" processing, denoted above as $b^{\overline{T_xDAS} \ \overline{R_xDAS}}$.

Figure 4b shows an image produced by first summing over the receive dimension using Minimum Variance adaptive beamforming, then summing over the transmit dimension using conventional "Delay-and-Sum". This method is described above, and an image processed in such a way is denoted as $b^{\overline{T_xDAS} \ \overline{R_xMV}}$.

Figure 4c shows an image produced by first summing over the receive dimension using conventional "Delay-and-Sum", then carrying out minimum variance adaptive beamforming over the transmit dimension, as described above. This image is denoted $b^{\overline{T_xMV} \ \overline{R_xDAS}}$.

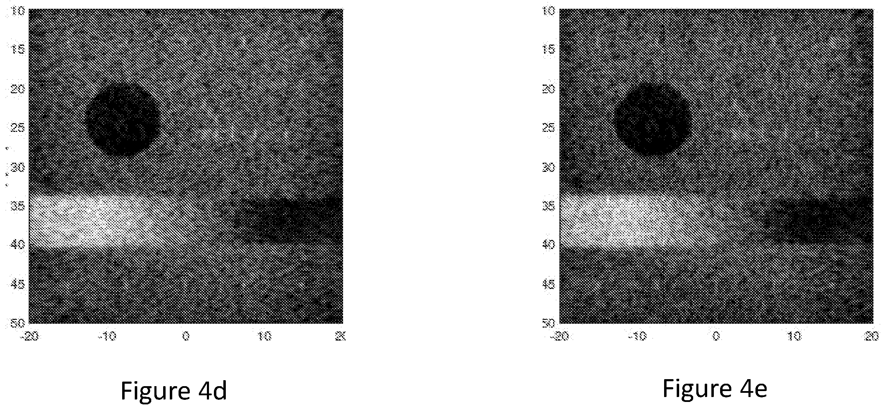

Figure 4d shows an image produced by summing first over the receive dimension, and then over the transmit dimension, both using minimum variance adaptive beamforming. This method has been referred to as Double Adaptive Plane-Wave imaging. Such an image is denoted as $b^{\overline{TxMV}\,\overline{RxMV}}$.

Figure 4e shows an image produced according to a method embodying the present invention, denoted as $b^{\overline{RxMV}\,\overline{TxDAS}}$.

These Figures clearly show an improvement in image resolution for all of the images (Figures 4b-4e) which use minimum variance beamforming, compared to conventional Delay-and-Sum (Figure 4a).

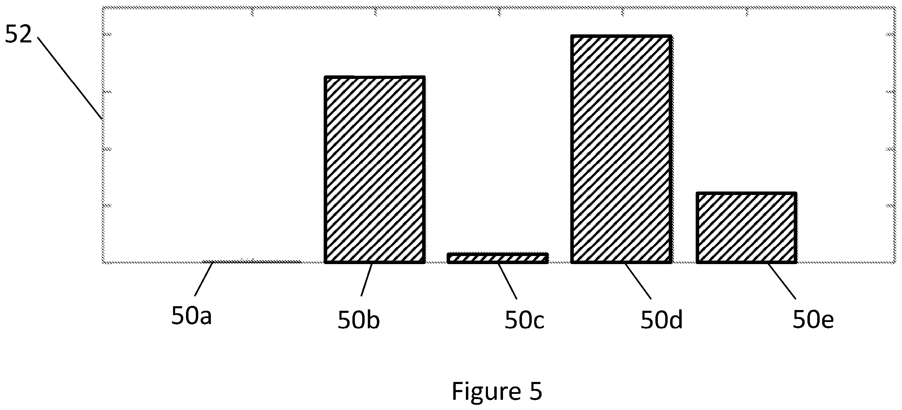

Figure 5 shows the computational time in minutes (on axis 52) required to produce each of the images shown in Figure 4a-e. Bar 50a is the computational time required for the image in Figure 4a, and all the other bars correspond respectively to each Figure, according to their letter.

Interestingly, the computation time for Figure 4e is significantly less than for Figure 4b and Figure 4d whilst still resulting in the same, and in fact somewhat better, image quality in terms of resolution and contrast. This reduction in computational time is as a result of the use of the principles in accordance with present invention and in particular of reducing the number of times the adaptive beamforming process is carried out on the different data sets.

Short Lag Spatial Coherence

The invention may also be applied to short lag spatial coherence (SLSC) algorithm.

The spatial correlation can be calculated as

$$\hat{R}(m) = \frac{1}{M-m} \sum_{i=1}^{M-m} \frac{\sum_{n=n_1}^{n_2} p_i(n)p_{i+m}(n)}{\sqrt{\sum_{n=n_1}^{n_2} p_i^2(n)p_{i+m}^2(n)}},$$

where $p$ is the delayed signal, $n$ is the depth sample index, $m$ is the distance, or lag, in number of elements between two points on the aperture. The sum over $n$ results in a correlation over a given kernel size, $n_2 - n_1$ of pixels. The short lag spatial coherence, is calculated as the sum over the first M lags,

$$b_{SLSC} = \sum_m^M \hat{R}(m)$$

Thus, notice that $b_{SLSC}$ is an image of the coherence and not the backscattered signal amplitude as with DAS and MV. The SLSC is a visualization of the spatial coherence of backscattered ultrasound waves, building upon the theoretical prediction of the van Cittert-Zernike (VCZ) theorem. Thus, the SLSC is applied on the $R_x$ dimension.

Convenionally, this is done by setting p in the equation above to $p = s_{m,a}$ so that we get one SLSC image $b_a^{\overline{R_{xSLSC}}}$ from each transmit $a$. Which again can be coherently compounded so that we get the final SLSC image.

$$b^{\overline{T_{xDAS}}\;\overline{R_{xSLSC}}} = \sum_{T_x} w_a^{T_x} b_a^{\overline{R_{xSLSC}}}$$

We can also exploit the invention: that we can sum over the $T_x$ dimension first, and then doing SLSCS over the $R_x$ dimension. Thus, we set $p = b_m^{\overline{T_{xDAS}}}$ resulting in the final image

$$b^{\overline{R_{xSLSC}}\;\overline{T_{xDAS}}}.$$

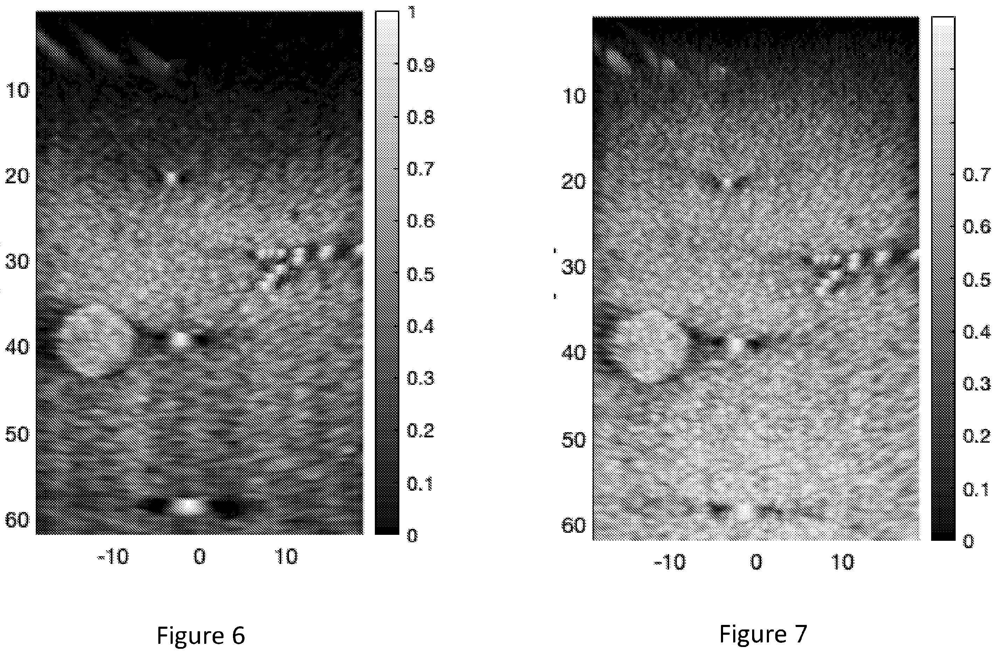

Figure 6 illustrates an ultrasound image of an experimental phantom using what is described as and can be regarded as a conventional implementation of the SLSC adaptive beamforming algorithm, denoted as $b_{SLSC}$ above. The image is from a focused transmit. The x and y-axes represent respectively an "x" and a "z" distance in mm.

Figure 7 illustrates an ultrasound image constructed from the same data as was used to produce the image shown in Figure 6, but processed using an imaging method in accordance with the invention. Specifically the data is processed using $b^{\overline{R_{xSLSC}}\,\overline{T_{xDAS}}}$ as described above. It can be appreciated that the region of high coherence from the speckle background is extended beyond only the focal region as is high in Figure 6.

The invention is however, not limited to the adaptive beamforming techniques of SLSC and MV.

Although the present invention has been described in the context of ultrasound imaging it is also suitable for use in other imaging systems, such as radar and sonar imaging systems.

In synthetic sonar and radar, the transmitter is often simpler than in the case of Coherent Plane Wave Compounding imaging. The transmitter often consists of one or a few elements, while the receiver is an array comprising many receiver elements.

In synthetic sonar and radar, a small number of transmitters (or possibly a single transmitter) is used to transmit a signal at a first location, and a large number of receivers are then used to receive the reflected signal. The small number of transmitters is then moved a short distance, and used to carry out a second transmission, which is again received by the array of receivers. This effectively forms what is known as a "synthetic long array" which is able to image a large region, as though a large array of transmitters were used, by using only a small number of transmitters but moving them many times. The above description is somewhat simplified, since typically in this kind of imaging the arrays are moved during the transmission and reception processes, not simply between each transmission-reception cycle.

The long receiver array can be treated mathematically as though it is a long array of transceivers. It can be treated as though a small region of the transceiver array, a "sub-array", has been used to make a first transmission, and has then been used to receive the reflected signal. It can then be treated as though a second region of the transceiver has been used to make a second transmission into the same region (this corresponds to the transmission by the transmitters after they have been moved to a different position), and this data has been received with a different array of receivers (an array of the same size as the array used for the first transmission).

This process is then repeated at many transmitter locations (which can be treated as many different "sub-arrays"). Of course there is not a long transceiver array, so these "sub-arrays" are just mathematical tools. In synthetic aperture processing (SAR and SAS), they might better be termed a "translated receiver array". Notably, the shorter arrays into which the synthetic receiver array is divided do not need to be the same size as the physical transmitter array. The shorter array could be shorter than the physical transmitter array (i.e. it could divide the physical array into two), or it could be longer than the physical transmitter array (i.e. the "sub-array" could comprise two-and-two transmit-receive locations using the physical receiver array (i.e. divide into something twice as long as the physical array)). This is likewise true for the technique used in the context of ultrasound imaging. In the ultrasound method there is a physical transceiver array, but nonetheless in processing the image the physical array can be artificially divided into shorter sub-arrays and summed to combine cubes from these. Ordinarily a transmission from a single position into a large region, using an unfocused beam, would form a low quality image. Adaptive beamforming algorithms, specifically adaptive beamforming based on adaptive element weightings, do not produce very good results when applied to such images. The technique described herein is useful as it allows data from a number of transmissions to be summed, and then synthetically formed into a focused transmit beam. Adaptive beamforming algorithms can then be applied very effectively to the image data.

Instead of just summing all of the received data together, as if it was a long (synthetic) array, cubes are formed for each transmission (or for every two transmissions/receptions etc.) and summed, as described above with reference to ultrasound imaging, to give a cube. Summing the acquired cube along the receiver dimension gives a high-resolution image of the order of, for example, cm or dm, as if conventional DAS beamforming had been used. Alternatively, adaptive beamforming along the receiver dimension can be applied to form an adaptive image of the same scene.

**Claims**

1. A method of imaging a target region, the method comprising:

   i) carrying out a first transmission of signals in a first direction into the target region using one or a plurality of transmitting devices (4) located at a first position;
   ii) receiving the signals reflected from the target region using a plurality of receiving elements;
   iii) for each receiving element, forming a data set made up of the received signals wherein the data set has at least two dimensions, wherein the first dimension (36a) represents the depth or range within the region and the second dimension (36b) represents lateral distance within the region and optionally wherein the data comprises a third dimension and wherein the third dimension represents an orthogonal lateral distance within the region, wherein the data set is formed by first calculating times of flight for each pixel within a two-dimensional grid, or optionally a three-dimensional grid, and then assigning to each pixel in the grid the data value of the corresponding time of the received signal, thereby generating a two-dimensional, or optionally three-dimensional, data set for each receiver and therefore a three-dimensional, or optionally four-dimensional, data set resulting from the first transmission of signals (30a, 30b, 30c, 30d, 30e);
   iv) making a second transmission of signals into the region, wherein the second transmission is in a second direction and/or made from a second position, distinct from the first direction or first position;
   v) repeating steps ii) and iii) for the signals received from the second transmission;
   vi) for each receiving element, summing the data acquired from each of the at least two transmissions, thereby producing a two-dimensional, or optionally three-dimensional receiving element data set corresponding to each receiving element;

vii) forming a three-dimensional, or optionally four-dimensional, data set made up of receiving element data sets (32), and subsequently carrying out adaptive beamforming on said three-dimensional, or four-dimensional, data set to combine the receiving element data sets so as to produce a single adaptive two-dimensional, or optionally three-dimensional, image of the region (34); and

viii) storing or displaying said image.

2. A method as claimed in claim 1, wherein the transmitted signal is a sound wave, optionally an ultrasound wave.

3. A method as claimed in claim 1, wherein the transmitted signal is an electromagnetic wave.

4. A method as claimed in any preceding claim, wherein the first transmission and/or the second transmission is carried out using a majority of the plurality of transmitting devices (4).

5. A method as claimed in any preceding claim, wherein the plurality of transmitters (4) are arranged so that the first transmission and/or the second transmission originates from a virtual source located behind the transmitters.

6. A method as claimed in any of claims 1-4, wherein the first transmission and/or the second transmission is a focused-wave waveform.

7. A method as claimed in any of claims 1-4, wherein the first transmission and/or the second transmission is an omni-directional wave and wherein the first transmission and the second transmission are made from different positions.

8. A method as claimed in any preceding claim, wherein the second direction of the second transmission is at a distinct angle to the first direction of the first transmission, wherein said distinct angles are each in a range from a minimum angle value $-\alpha_{max}$, to a maximum angle value $\alpha_{max}$, and the value of $\alpha_{max}$ is determined to be $\alpha_{max} \approx 1/2f\#$, wherein f# is a selected ratio between the depth of a pixel and the size of a receiving aperture.

9. An imaging device, comprising:

one or a plurality of transmitting devices (4), for carrying out a first transmission of signals in a first direction into a target region from a first position and for carrying out a second transmission of signals in a second direction from a second position, wherein the second direction is distinct from the first direction and/or the second position is distinct from the first position, into the target region;

a plurality of receiving elements (4), for receiving the signals reflected from a target region using the plurality of receiving elements;

a processing unit, configured to form a first data set made up of the received signals from the first transmission, and a second data set made up of the received signals from the second transmission, wherein the first data set and the second data set comprise two dimensions, wherein the first dimension (36a) represents the depth or range within the region and the second dimension (36b) represents lateral distance within the region, and optionally wherein the first data set and the second data set each comprise a third dimension and wherein the third dimension represents an orthogonal lateral distance within the region;

wherein the data set is formed by first calculating times of flight for each pixel within a two-dimensional, or optionally three-dimensional, grid and then assigning to each pixel in the grid the data value of the corresponding time of the received signal, thereby generating a two-dimensional, or optionally three-dimensional, data set for each receiver and therefore a three-dimensional, or optionally four-dimensional, data set resulting from the first transmission of signals (30a, 30b, 30c, 30d, 30e);

the processing unit further configured, for each receiving element, to sum the data acquired from each of the at least two transmissions, thereby producing a two-dimensional, or optionally three-dimensional receiving element data set corresponding to each receiving element;

the processing unit further configured to form a three-dimensional, or optionally four-dimensional, data set (32) made up of receiving element data sets, and subsequently carry out adaptive beamforming on said three-dimensional, or optionally four dimensional, data set to combine the receiving element data sets so as to produce a single adaptive image of the region (34); and

a storage unit; for storing or displaying said image.

10. An imaging device as claimed in claim 9, wherein the transmitted signal is a sound wave, optionally an ultrasound wave, or wherein the transmitted signal is an electromagnetic wave.

11. An imaging device as claimed in claim 9 or 10, wherein the first transmission and/or the second transmission is carried out using a majority of the plurality of transmitting devices.

12. An imaging device as claimed in any of claims 9-11, wherein the plurality of transmitters are arranged so that the first transmission and/or the second transmission originates from a virtual source located behind the transmitters.

13. An imaging device as claimed in any of claims 9-11, wherein the first transmission and/or the second transmission is a focused-wave waveform.

14. An imaging device as claimed in any of claims 9-11, wherein the first transmission and/or the second transmission is an omni-directional wave and wherein the first transmission and the second transmission are made from different positions.

15. An imaging device as claimed in any of claims 9-14, wherein the second direction of the second transmission is at a distinct angle to the first direction of the first transmission, wherein said distinct angles are each in a range from a minimum angle value $-\alpha_{max}$, to a maximum angle value $\alpha_{max}$, and the value of $\alpha_{max}$ is determined to be $\alpha_{max} \approx 1/2f\#$, wherein f# is a selected ratio between the depth of a pixel and the size of a receiving aperture.

## Patentansprüche

1. Verfahren zum Abbilden einer Zielregion, das Verfahren umfassend:

   i) Durchführen einer ersten Übertragung von Signalen in einer ersten Richtung in den Zielbereich unter Verwendung einer oder einer Vielzahl von Übertragungsvorrichtungen (4), die sich an einer ersten Position befinden;
   ii) Empfangen der von der Zielregion reflektierten Signale mit Hilfe einer Vielzahl von Empfangselementen;
   iii) für jedes Empfangselement, Bilden eines Datensatzes aus den empfangenen Signalen, wobei der Datensatz zumindest zwei Dimensionen aufweist, wobei die erste Dimension (36a) die Tiefe oder den Bereich innerhalb der Region und die zweite Dimension (36b) den seitlichen Abstand innerhalb der Region darstellt und optional wobei die Daten eine dritte Dimension umfassen und wobei die dritte Dimension einen orthogonalen seitlichen Abstand innerhalb der Region darstellt,
   wobei der Datensatz dadurch gebildet wird, dass zunächst die Flugzeiten für jedes Pixel innerhalb eines zwei- oder optional dreidimensionalen Gitters berechnet und anschließend jedem Pixel die Datenwerte entsprechend der Empfangszeit des Signals zugewiesen werden, dadurch Erzeugen eines zweidimensionalen, oder optional dreidimensionalen Datensatzes für jeden Empfänger und somit einen dreidimensionalen oder optional vierdimensionalen Datensatz, der sich aus der ersten Übertragung von Signalen (30a, 30b, 30c, 30d, 30e) ergibt;
   iv) Durchführen einer zweiten Übertragung von Signalen in die Region, wobei die zweite Übertragung in einer zweiten Richtung und/oder von einer zweiten Position aus erfolgt, die sich von der ersten Richtung oder der ersten Position unterscheidet;
   v) Wiederholen der Schritte ii) und iii) für die von der zweiten Übertragung empfangenen Signale;
   vi) für jedes empfangende Element, Summieren der von jeder der mindestens zwei Übertragungen erfassten Daten, dadurch Erzeugen eines zweidimensionalen oder optional dreidimensionalen Empfangselementdatensatzes für jedes Empfangselement;
   vii) Bilden eines dreidimensionalen oder optional vierdimensionalen Datensatzes, der aus Empfangselement-Datensätzen (32) besteht, und anschließendes adaptives Strahlformen an dem dreidimensionalen oder vierdimensionalen Datensatz zur Kombination der Empfangselement-Datensätze, um ein einziges adaptives zweidimensionales oder optional dreidimensionales Bild des Bereichs (34) zu erzeugen; und
   viii) Speichern oder Anzeigen des Bildes.

2. Verfahren nach Anspruch 1, wobei das übertragene Signal eine Schallwelle, optional eine Ultraschallwelle, ist.

3. Verfahren nach Anspruch 1, wobei das übertragene Signal eine elektromagnetische Welle ist.

4. Verfahren nach einem vorstehenden Anspruch, wobei die erste Übertragung und/oder die zweite Übertragung unter Verwendung einer Mehrheit der Vielzahl von Übertragungsvorrichtungen (4) durchgeführt wird.

5. Verfahren nach einem vorstehenden Anspruch, wobei die Vielzahl von Übertragungsvorrichtungen (4) angeordnet sind, so dass die erste Übertragung und/oder die zweite Übertragung von einer virtuellen Quelle hinter den Übertragungsvorrichtungen ausgeht.

6. Verfahren nach einem der Ansprüche 1-4 wobei die erste Übertragung und/oder die zweite Übertragung eine fokussierte Wellenform ist.

7. Verfahren nach einem der Ansprüche 1-4 wobei die erste Übertragung und/oder die zweite Übertragung eine ungerichtete Welle ist und wobei die erste Übertragung und die zweite Übertragung von verschiedenen Positionen aus erfolgen.

8. Verfahren nach einem vorstehenden Anspruch, wobei die zweite Richtung der zweiten Übertragung in einem bestimmten Winkel zur ersten Richtung der ersten Übertragung steht, wobei die verschiedenen Winkel jeweils in einem Bereich von einem minimalen Winkelwert $-\alpha_{max}$ bis zu einem maximalen Winkelwert $\alpha_{max}$ liegen, und der Wert von $\alpha_{max}$ zu $\alpha_{max} \approx 1/2f\#$ bestimmt wird, wobei f# ein ausgewähltes Verhältnis zwischen der Tiefe eines Pixels und der Größe einer Empfangsöffnung ist.

9. Bildgebungsvorrichtung, umfassend:

    eine oder eine Vielzahl von Übertragungsvorrichtungen (4) zur Durchführung einer ersten Übertragung von Signalen in einer ersten Richtung in ein Zielgebiet von einer ersten Position aus und zur Durchführung einer zweiten Übertragung von Signalen in einer zweiten Richtung von einer zweiten Position aus, wobei die zweite Richtung sich von der ersten Richtung unterscheidet und/oder die zweite Position sich von der ersten Position unterscheidet, in den Zielbereich;
    eine Vielzahl von Empfangselementen (4), um die von einem Zielgebiet reflektierten Signale mit Hilfe der Vielzahl von Empfangselementen zu empfangen;
    eine Verarbeitungseinheit, die konfiguriert ist, um einen ersten Datensatz zu bilden, der aus den empfangenen Signalen der ersten Übertragung besteht, und einen zweiten Datensatz, der aus den empfangenen Signalen der zweiten Übertragung besteht,
    wobei der erste Datensatz und der zweite Datensatz zwei Dimensionen umfassen, wobei die erste Dimension (36a) die Tiefe oder den Bereich innerhalb der Region und die zweite Dimension (36b) den seitlichen Abstand innerhalb der Region darstellt, und optional wobei der erste Datensatz und der zweite Datensatz jeweils eine dritte Dimension umfassen und wobei die dritte Dimension einen orthogonalen seitlichen Abstand innerhalb der Region darstellt;
    wobei der Datensatz gebildet wird, indem zunächst Flugzeiten für jedes Pixel innerhalb eines zweidimensionalen oder optional dreidimensionalen Gitters berechnet werden und dann jedem Pixel in dem Gitter der Datenwert der entsprechenden Zeit des empfangenen Signals zugewiesen wird, dadurch Erzeugen eines zweidimensionalen, oder optional dreidimensionalen Datensatzes für jeden Empfänger und somit einen dreidimensionalen oder optional vierdimensionalen Datensatz, der sich aus der ersten Übertragung von Signalen (30a, 30b, 30c, 30d, 30e) ergibt;
    die Verarbeitungseinheit weiter konfiguriert ist, um für jedes Empfangselement die von jeder der mindestens zwei Übertragungen erfassten Daten zu summieren, dadurch Erzeugen eines zweidimensionalen oder optional dreidimensionalen Empfangselementdatensatzes für jedes Empfangselement;
    die Verarbeitungseinheit so weiter konfiguriert ist, dass sie einen dreidimensionalen oder optional vierdimensionalen Datensatz (32) bildet, der aus Empfangselement-Datensätzen besteht, und anschließend adaptives Strahlformen an dem dreidimensionalen oder optional vierdimensionalen Datensatz zur Kombination der Empfangselement-Datensätze durchführt, um ein einziges adaptives Bild der Region (34) zu erzeugen; und eine Speichereinheit zum Speichern oder Anzeigen des Bildes.

10. Bildgebungsvorrichtung nach Anspruch 9, wobei das übertragene Signal eine Schallwelle, optional eine Ultraschallwelle, ist, oder wobei das übertragene Signal eine elektromagnetische Welle ist.

11. Bildgebungsvorrichtung nach Anspruch 9 oder 10, wobei die erste Übertragung und/oder die zweite Übertragung unter Verwendung einer Mehrheit der Vielzahl von Übertragungsvorrichtungen durchgeführt wird.

12. Bildgebungsvorrichtung nach einem der Ansprüche 9-11, wobei die Vielzahl von Übertragungsvorrichtungen so angeordnet ist, dass die erste Übertragung und/oder die zweite Übertragung von einer virtuellen Quelle ausgeht, die sich hinter den Übertragungsvorrichtungen befindet.

**13.** Bildgebungsvorrichtung nach einem der Ansprüche 9-11, wobei die erste Übertragung und/oder die zweite Übertragung eine fokussierte Wellenform ist.

**14.** Bildgebungsvorrichtung nach einem der Ansprüche 9-11, wobei die erste Übertragung und/oder die zweite Übertragung eine ungerichtete Welle ist und wobei die erste Übertragung und die zweite Übertragung von verschiedenen Positionen aus erfolgen.

**15.** Bildgebungsvorrichtung nach einem der Ansprüche 9-14, wobei die zweite Richtung der zweiten Übertragung in einem bestimmten Winkel zur ersten Richtung der ersten Übertragung steht, wobei die verschiedenen Winkel jeweils in einem Bereich von einem minimalen Winkelwert $-\alpha_{max}$ bis zu einem maximalen Winkelwert $\alpha_{max}$ liegen, und der Wert von $\alpha_{max}$ zu $\alpha_{max} \approx 1/2f\#$ bestimmt wird, wobei f# ein ausgewähltes Verhältnis zwischen der Tiefe eines Pixels und der Größe einer Empfangsöffnung ist.

## Revendications

**1.** Procédé d'imagerie d'une région cible, le procédé comprenant :

i) la réalisation d'une première émission de signaux dans une première direction dans la région cible à l'aide d'un ou plusieurs dispositifs émetteurs (4) situés dans une première position ;
ii) la réception des signaux réfléchis par la région cible à l'aide d'une pluralité d'éléments récepteurs ;
iii) la formation, pour chaque élément récepteur, d'un ensemble de données composé des signaux reçus dans lequel l'ensemble de données présente au moins deux dimensions, dans lequel la première dimension (36a) représente la profondeur ou la plage au sein de la région et la deuxième dimension (36b) représente un distance latérale au sein de la région et facultativement, dans lequel les données comprennent une troisième dimension et dans lequel la troisième dimension représente une distance latérale orthogonale au sein de la région, dans lequel l'ensemble de données est formé en calculant d'abord des temps de vol pour chaque pixel au sein d'une grille bidimensionnelle, ou facultativement une grille tridimensionnelle, puis en attribuant à chaque pixel de la grille la valeur de données du temps correspondant du signal reçu, permettant ainsi la génération d'un ensemble de données bidimensionnelles, ou facultativement tridimensionnelles, pour chaque récepteur et donc un ensemble de données tridimensionnelles, ou facultativement quadridimensionnelles, résultant de la première émission de signaux (30a, 30b, 30c, 30d, 30e) ;
iv) la réalisation d'une seconde émission de signaux dans la région, dans lequel la seconde émission s'effectue dans une seconde direction et/ou est réalisée à partir d'une seconde position, distincte de la première direction ou de la première position ;
v) la répétition des étapes ii) et iii) pour les signaux reçus en provenance de la seconde émission ;
vi) pour chaque élément récepteur, la somme des données acquises à partir de chacune des au moins deux émissions, produisant ainsi un ensemble de données d'élément récepteur bidimensionnelles, ou facultativement tridimensionnelles, correspondant à chaque élément récepteur ;
vii) la formation d'un ensemble de données tridimensionnelles, ou facultativement quadridimensionnelles, composé d'ensembles de données (32) d'éléments récepteurs, et la réalisation ultérieure d'une formation de faisceau adaptative sur ledit ensemble de données tridimensionnelles, ou quadridimensionnelles, pour combiner les ensembles de données d'éléments récepteurs de manière à produire une seule image adaptative bidimensionnelle, ou facultativement tridimensionnelle, de la région (34) ; et
viii) le stockage ou l'affichage de ladite image.

**2.** Procédé selon la revendication 1, dans lequel le signal émis est une onde sonore, facultativement une onde ultrasonore.

**3.** Procédé selon la revendication 1, dans lequel le signal émis est une onde électromagnétique.

**4.** Procédé selon une quelconque revendication précédente, dans lequel la première émission et/ou la seconde émission est réalisée à l'aide d'une majorité de la pluralité de dispositifs émetteurs (4).

**5.** Procédé selon une quelconque revendication précédente, dans lequel la pluralité d'émetteurs (4) sont agencés de sorte que la première émission et/ou la seconde émission proviennent d'une source virtuelle située derrière les émetteurs.

**6.** Procédé selon l'une quelconque des revendications 1 à 4, dans lequel la première émission et/ou la seconde émission est une forme d'onde à onde focalisée.

**7.** Procédé selon l'une quelconque des revendications 1 à 4, dans lequel la première émission et/ou la seconde émission est une onde omnidirectionnelle et dans lequel la première émission et la seconde émission sont réalisées à partir de positions différentes.

**8.** Procédé selon une quelconque revendication précédente, dans lequel la seconde direction de la seconde émission est à un angle distinct de la première direction de la première émission, dans lequel lesdits angles distincts sont chacun dans une plage allant d'une valeur d'angle minimale $-\alpha_{max}$, à une valeur d'angle maximale $\alpha_{max}$, et la valeur de $\alpha_{max}$ est déterminée comme étant $\alpha_{max} \approx 1/2f\#$, dans lequel f# est un rapport sélectionné entre la profondeur d'un pixel et la taille d'une ouverture de réception.

**9.** Dispositif d'imagerie, comprenant :

un ou une pluralité de dispositifs émetteurs (4), pour réaliser une première émission de signaux dans une première direction dans une région cible à partir d'une première position et pour réaliser une seconde émission de signaux dans une seconde direction à partir d'une seconde position, dans lequel la seconde direction est distincte de la première direction et/ou la seconde position est distincte de la première position, dans la région cible ;

une pluralité d'éléments récepteurs (4), pour recevoir les signaux réfléchis par une région cible en utilisant la pluralité d'éléments récepteurs ;

une unité de traitement, configurée pour former un premier ensemble de données composé des signaux reçus en provenance de la première émission, et un second ensemble de données composé des signaux reçus en provenance de la seconde émission,

dans lequel le premier ensemble de données et le second ensemble de données comprennent deux dimensions, dans lequel la première dimension (36a) représente la profondeur ou la plage au sein de la région et la deuxième dimension (36b) représente une distance latérale au sein de la région, et facultativement dans lequel le premier ensemble de données et le second ensemble de données comprennent chacun une troisième dimension et dans lequel la troisième dimension représente une distance latérale orthogonale au sein de la région ;

dans lequel l'ensemble de données est formé en calculant d'abord des temps de vol pour chaque pixel au sein d'une grille bidimensionnelle, ou facultativement tridimensionnelle, puis en attribuant à chaque pixel de la grille la valeur de données du temps correspondant du signal reçu, permettant ainsi la génération d'un ensemble de données bidimensionnelles, ou facultativement tridimensionnelles, pour chaque récepteur et donc un ensemble de données tridimensionnelles, ou facultativement quadridimensionnelles, résultant de la première émission de signaux (30a, 30b, 30c, 30d, 30e) ;

l'unité de traitement configurée en outre, pour chaque élément récepteur, pour additionner les données acquises à partir de chacune des au moins deux émissions, produisant ainsi un ensemble de données d'élément récepteur bidimensionnelles, ou facultativement tridimensionnelles, correspondant à chaque élément récepteur ;

l'unité de traitement configurée en outre pour former un ensemble de données tridimensionnelles, ou facultativement quadridimensionnelles, (32) composé d'ensembles de données d'éléments récepteurs, puis réaliser une formation de faisceau adaptative sur ledit ensemble de données tridimensionnelles, ou facultativement quadridimensionnelles, pour combiner les ensembles de données d'éléments récepteurs de manière à produire une image adaptative unique de la région (34) ; et

une unité de stockage ; pour stocker ou afficher ladite image.

**10.** Dispositif d'imagerie selon la revendication 9, dans lequel le signal émis est une onde sonore, facultativement une onde ultrasonore, ou dans lequel le signal émis est une onde électromagnétique.

**11.** Dispositif d'imagerie selon la revendication 9 ou la revendication 10, dans lequel la première émission et/ou la seconde émission est réalisée en utilisant une majorité de la pluralité de dispositifs émetteurs.

**12.** Dispositif d'imagerie selon l'une quelconque des revendications 9 à 11, dans lequel la pluralité d'émetteurs sont agencés de sorte que la première émission et/ou la seconde émission proviennent d'une source virtuelle située derrière les émetteurs.

**13.** Dispositif d'imagerie selon l'une quelconque des revendications 9 à 11, dans lequel la première émission et/ou la seconde émission est une forme d'onde à onde focalisée.

**14.** Dispositif d'imagerie selon l'une quelconque des revendications 9 à 11, dans lequel la première émission et/ou la seconde émission est une onde omnidirectionnelle et dans lequel la première émission et la seconde émission sont réalisées à partir de positions différentes.

**15.** Dispositif d'imagerie selon l'une quelconque des revendications 9 à 14, dans lequel la seconde direction de la seconde émission est à un angle distinct de la première direction de la première émission, dans lequel lesdits angles distincts sont chacun dans une plage allant d'une valeur d'angle minimale $-\alpha_{max}$, à une valeur d'angle maximale $\alpha_{max}$, et la valeur de $\alpha_{max}$ est déterminée comme étant $\alpha_{max} \approx 1/2f\#$, dans lequel f# est un rapport sélectionné entre la profondeur d'un pixel et la taille d'une ouverture de réception.

Figure 1

Figure 2

Figure 3

Figure 4a          Figure 4b          Figure 4c

EP 3 997 482 B1

Figure 4e

Figure 4d

21

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130253325 A1

- US 20150293215 A1